# EUROPÄISCHE PATENTSCHRIFT

(11) **EP 1 000 348 B1**
(45) Veröffentlichungstag und Bekanntmachung des Hinweises auf die Patenterteilung: **15.04.2009**
(21) Anmeldenummer: 99936272.6
(22) Anmeldetag: 18.05.1999
(51) Int. Cl.: G01N 27/02, G01R 27/22

(54) **VORRICHTUNG UND VERFAHREN ZUM BERÜHRUNGSFREIEN MESSEN DER LEITFÄHIGKEIT EINER IN EINEM STRÖMUNGSKANAL BEFINDLICHEN FLÜSSIGKEIT**
DEVICE AND METHOD FOR CARRYING OUT A CONTACTLESS MEASUREMENT OF THE CONDUCTIVITY OF A LIQUID SITUATED IN A FLOW CHANNEL
DISPOSITIF ET PROCEDE POUR LA MESURE SANS CONTACT DE LA CONDUCTIBILITE D'UN LIQUIDE SE TROUVANT DANS UN CANAL D'ECOULEMENT

(30) Priorität: 28.05.1998 DE 19823836
(43) Veröffentlichungstag der Anmeldung: 17.05.2000
(73) Patentinhaber: Fresenius Medical Care Deutschland GmbH, 61350 Bad Homburg v.d.H. (DE)
(72) Erfinder: KOERDT, Franz-Wilhelm, D-61231 Bad Nauheim (DE); KAISER, Peter, D-60316 Frankfurt am Main (DE); HÜLSMANN, Hans, Georg, D-61352 Bad Homburg (DE)
(74) Vertreter: Vièl, Christof
(86) Internationale Anmeldenummer: PCT/DE1999/001492
(87) Internationale Veröffentlichungsnummer: WO 1999/061900

(56) Entgegenhaltungen:
- EP-A- 0 603 020
- CH-A- 419 670
- DE-A- 2 822 943
- DE-A- 3 718 111
- DE-B- 1 281 567
- DE-C- 860 663
- US-A- 3 404 335

## Beschreibung

Die Erfindung betrifft eine Meßanordnung und ein Verfahren zum berührungsfreien Messen der Leitfähigkeit einer in einem Strömungskanal befindlichen Flüssigkeit sowie die Verwendung der Meßanordnung und des Verfahrens.

In vielen Bereichen, beispielsweise der Dialyse, wird die Leitfähigkeit einer Flüssigkeit als wichtiges Maß für deren Zusammensetzung herangezogen. Die Messung mittels stromdurchflossener Elektroden stellt dabei ein Standardverfahren dar, das jedoch für Messungen an Einmalartikeln ("Disposables"), wie z.B. Schläuchen, nicht geeignet ist, da aus Kostengründen keine Elektroden in die Einmalartikel eingearbeitet werden können.

Eine Vorrichtung zum berührungsfreien (elektrodenlosen) Messen der Leitfähigkeit einer in einem Strömungskanal befindlichen Flüssigkeit ist aus der DE 37 18 111 C2 bekannt. Dort wird über eine Spule in der Flüssigkeit ein Stromfluß induziert, dessen Stärke mittels einer zweiten Spule gemessen wird. Diese Vorrichtung ist, was die Herstellung und die Handhabung anbelangt, aufwendig.

Aus der EP 0 603 020 A1 ist eine Vorrichtung zum Ermitteln von Eigenschaften von Flüssigkeiten, bestehend aus einer um einen Flüssigkeitskanal angeordneten zylindrischen Spule, einem Signalgenerator, der in der Spule einen periodischen Erregerstrom hervorruft sowie einer mit der Spule verbundenen Meßeinheit und einer Auswerteeinheit. Diese Vorrichtung ist aufgrund ihrer Ausgestaltung auf Dauerbetrieb ausgelegt.

Die DE 28 22 943 A1 beschreibt eine Meßanordnung zur Messung der elektrischen Leitfähigkeit von Flüssigkeiten, wobei der Flüssigkeitsstrom in zwei Flüssigkeitsringe aufgeteilt und an eine um einen ersten Flüssigkeitsring angeordnete Primärspule eine Meßspannung angelegt wird, welche in einer um einen anderen Flüssigkeitsring angeordneten Sekundärspule eine induzierte Spannung zur Folge hat, die von der elektrischen Leitfähigkeit der Flüssigkeit abhängig ist.

Der Erfindung liegt somit die Aufgabe zugrunde, eine Meßanordnung und ein Verfahren zum berührungsfreien Messen der Leitfähigkeit einer in einem Strömungskanal befindlichen Flüssigkeit zu schaffen, das einfach zu handhaben und möglichst kostengünstig ist.

Diese Aufgabe wird erfindungsgemäß durch die Merkmale des Ansprüche 1 und 11 gelöst. Die Meßanordnung umfaßt genau eine Torusspule zur Anordnung um den Strömungskanal sowie eine mit der Torusspule verbundene Auswerteschaltung; in welcher aus dem ermittelten Leistungsverlust die Leitfähigkeit der in dem Strömungskanal befindlichen Flüssigkeit ermittelbar ist.

Der Erfindung liegt die Überlegung zugrunde, daß durch eine Torusspule ein zeitlich veränderliches Magnetfeld erzeugt wird, dessen Feldlinien (zumindest idealisiert) konzentrische Kreise bilden, die im Innern der Torusspule verlaufen. Durch das zeitlich veränderliche Magnetfeld im Innern des Toruskörpers wird ein zeitlich veränderliches elektrisches Feld erzeugt, dessen Feldvektor in axialer Richtung durch den Torus und damit durch den in dem Torusring angeordneten Flüssigkeitskanal verläuft.

Durch dieses elektrische Feld, welches mit der Frequenz des Spulenstroms sein Vorzeichen ändert, werden die in der Flüssigkeit befindlichen Ionen in Bewegung versetzt, was einen Wechselstrom in axialer Richtung durch die Flüssigkeit bedeutet. Die Erzeugung des Stromes in der Flüssigkeit erfolgt somit auf die gleiche Art wie in der DE 37 18 111 C2 beschrieben. Bei der vorliegenden Erfindung wird jedoch nicht die Stärke des durch die Flüssigkeit fließenden Stromes gemessen, sondern der durch den Stromfluß in der Flüssigkeit und den ohmschen Widerstand der Flüssigkeit hervorgerufene Leistungsverlust der Meßanordnung.

Bei geeigneter Wahl der Auswerteschaltung und der Spule sowie des Flüssigkeitskanales hat es sich gezeigt, daß die Ausbildung der Enden des Flüssigkeitskanales (Ventile, etc. und die Umgebung nur einen vernachlässigbaren Einfluß auf die Stabilität des Meßsignales haben.

Eine spezielle Ausbildung des Flüssigkeitskanales ist nicht erforderlich. Vorteilhafterweise sollte der Flüssigkeitskanal in einer Länge von einigen 10 cm keine zeitlich veränderlichen, die Flüssigkeitsführung betreffenden Elemente wie Ventile aufweisen.

Eine Ausbildung der Vorrichtung besteht darin, daß die Torusspule aus einem Spulenkörper, der mit Draht umwickelt ist, besteht.

Es ist vorteilhaft, daß die Drahtwicklung der Torusspule einlagig ist.

Ebenso ist es zweckmäßig, daß der Spulenkörper aus nichtmagnetischem Material besteht.

Eine Weiterbildung der Erfindung besteht darin, daß die Torusspule durch eine axiale Ebene geteilt ist und geöffnet werden kann.

Hierdurch wird es möglich, den Strömungskanal, z.B. einen Schlauch, in die Torusspule einzubringen. Die Torusspule kann auch um den Rand eines Einmalartikels (z.B. einer Kassette) geklappt werden, um einen dort befindlichen Flüssigkeitskanal zu umfassen.

Vorteilhaft ist weiterhin, daß mindestens ein Scharnier zum Aufklappen der Torusspule vorgesehen ist.

Eine andere Ausbildung der Erfindung besteht darin, daß die Torusspule durch eine translatorische Bewegung in axialer oder radialer Richtung zum Einlegen des Strömungskanals zu öffnen ist.

Eine Weiterbildung der Erfindung besteht darin, daß die Vorrichtung eine mit der Torusspule zusammengeschaltete Kapazität zur Bildung eines Schwingkreises umfaßt.

Eine Ausbildung der Erfindung sieht vor, daß die Auswerteschaltung Mittel zum Feststellen der Dämpfung des Schwingkreises aufweist.

Erfindungsgemäß ist vorgesehen, daß die Auswerteschaltung Mittel zum Bestimmen der Güte der Torusspule aufweist.

Die Messung der Leitfähigkeit geschieht hierbei über die Messung der Güte der Spule bzw. die Messung der Dämpfung der Resonanzschwingung in einem Schwingkreis. In beiden Fällen wird dazu die Spule mit einer Kapazität zusammengeschaltet, um einen Schwingkreis zu bilden, der eine Resonanzfrequenz im MHz-Bereich hat. Durch die Messung beispielsweise der Schwingungsamplitude an der Spule bzw. deren Änderung kann die Leitfähigkeit des in der Spule befindlichen Mediums bestimmt werden. Eine Gütemessung kann ebenfalls eingesetzt werden; bei ihr wird das Verhältnis von Blind- zu Wirkwiderstand der Anordnung bei Resonanz ermittelt.

Erfindungsgemäß ist weiterhin ein Verfahren zum berührungsfreien Messen der Leitfähigkeit einer in einem Strömungskanal fließenden Flüssigkeit, das folgende Verfahrensschritte aufweist:
- Anordnen genau einer Torusspule um den Strömungskanal, wobei die Torusspule ein zeitlich lesänderliches hagnetfeld erzenst, durch welches im Innern des Tornskövpers ein zeitlich oeranderliches elektrisches Feld erzengt wird, dessen Feldvektor im axizler durch den Torns und dannnt durch den im dem Tornsning ans geordneten Ströungskcnnal verläuft und wobei eine Auswerteschaltung mit der Torusspule verbunden ist,
- Messen des Leistungsverlustes der die Torusspule und die Auswerteschaltung umfassenden Meßanordnung und
- Berechnen der Leitfähigkeit aus dem gemessenen Leistungsverlust in der Auswerteschaltung.

Die Veränderung der elektrischen Größen (Güte der Torusspule, Dämpfung der Schwingung eines Schwingkreises) wird also im Bereich der Auswerteschaltung gemessen und die Leitfähigkeit anhand dieser gemessenen Größen ermittelt. Selbstverständlich wäre es auch denkbar, die Messung der elektrischen Größen direkt im Bereich der Torusspule vorzunehmen und lediglich die Auswertung in der Auswerteschaltung durchzuführen.

Schließlich liegt auch die Verwendung der erfindungsgemäßen Meßanordnung oder des erfindungsgemäßen Verfahrens zur Leitfähigkeitsmessung von Dialyseflüssigkeiten im Rahmen der Erfindung.

Die Erfindung bringt im wesentlichen die folgenden Vorteile mit sich:
- Es wird eine einfache Messung der Leitfähigkeit auch an Einmalartikeln möglich. Unter "Messung" ist hierbei nicht nur die absolute Bestimmung der Leitfähigkeit über eine Kalibrierungskurve zu verstehen, sondern auch Aussagen über die relative Leitfähigkeit der Flüssigkeit.
- Hierbei sind keine speziellen Einmalartikel erforderlich, da die Torusspule um normale Schläuche angeordnet werden kann. Bei Verwendung von Kassettendisposables muß lediglich ein Flüssigkeitskanal in den Randbereich.der Kassette gelegt werden, damit die Torusspule den Flüssigkeitskanal umfassen kann.
- Die Vorrichtung weist nur eine Spule auf, womit der Aufbau einfacher und kostengünstiger wird.
- Die Handhabung ist durch das Umklappen der Spule um den Flüssigkeitskanal denkbar einfach.
- Es wird ein deutlicher Meßeffekt erzielt, der wesentlich stärker als bei einer kapazitativen Messung ist und der durch eine verhältnismäßig einfache elektronische Schaltung ausgewertet werden kann.

Im folgenden wird ein Ausführungsbeispiel der Erfindung anhand von Zeichnungen beschrieben.

Es zeigt
- Fig. 1: eine perspektivische Darstellung einer geschlossenen erfindungsgemäßen Vorrichtung, die um einen Flüssigkeitskanal angeordnet ist.
- Fig. 2: eine geschnittene Darstellung einer aufgeklappten erfindungsgemäßen Vorrichtung mit einem darin eingebrachten Flüssigkeitskanal,

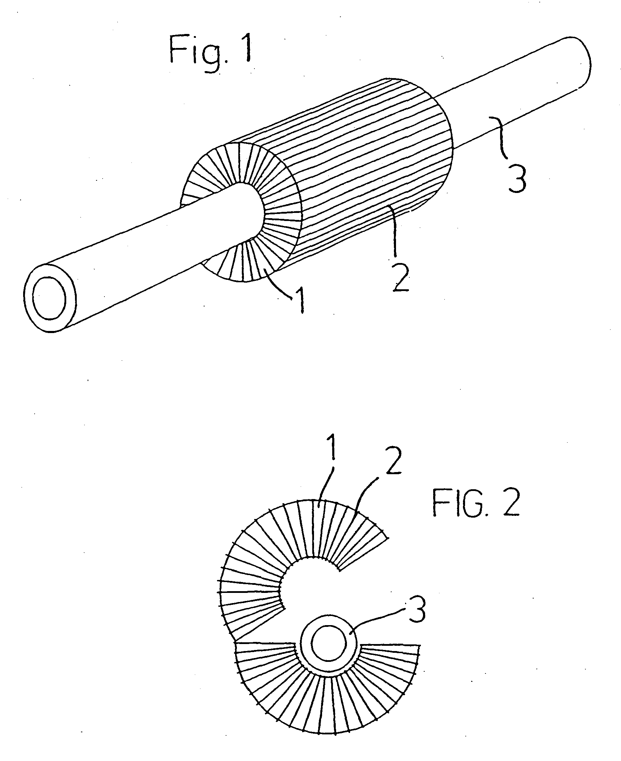

Wie aus Fig. 1 ersichtlich besteht die Vorrichtung aus einem Spulenkörper 1, der aus einem nichtmagnetischen Material (z.B. Kunststoff) besteht. Auf diesen Spulenkörper 1 ist eine einlagige Spulenwicklung 2 aus Draht aufgebracht. Der Spulenkörper 1 ist axial geteilt (Fig. 2) und die zwei gleich großen Hälften sind aufklappbar, z.B. über ein Scharnier. Das Aufklappen ermöglicht das Einlegen eines Flüssigkeitskanals 3, z.B. eines Schlauches, in die Vorrichtung.

Die Torusspule ist mit einer Kapazität zu einem Schwingkreis zusammengeschaltet, der eine Resonanzfrequenz im MHz-Bereich aufweist. Bei geeigneter Dimensionierung der Torusspule und geeigneter Anlegung des Schwingkreises erreicht man Änderungen der Spannungsamplitude an der Torusspule von ca. 2 Vss bei einer Änderung der Leitfähigkeit der Flüssigkeit von ca. 7 mS/cm bis ca. 17 mS/cm, also im physiologisch relevanten Bereich der Leitfähigkeit.

Diese Amplitudenänderung wird von einer Auswerteschaltung ausgewertet.

## Patentansprüche

1. Meßanordnung zum berührungsfreien Messen der Leitfähigkeit einer in einem Strömungskanal befindlichen Flüssigkeit, wobei die Meßanordnung genau eine Torusspule (1, 2) zur Anordnung um den Strömungskanal umfaßt, welche ein zeitlich veränderliches Magnetfeld erzeugt, durch welches im Innern des Toruskörpers ein zeitlich veränderliches elektrisches Feld erzeugt wird, dessen Feldvektor in axialer Richtung durch den Torus und damit durch den in der Torusspule angeordneten Strömungskanal verläuft (3) sowie eine mit der Torusspule (1) verbundene Auswerteschaltung umfaßt, in welcher mittels des Leistungsverlustes aufgrund des Stromflusses in der Flüssigkeit und des ohmischen Widerstandes der Flüssigkeit die Leitfähigkeit der in dem Strömungskanal (3) befindlichen Flüssigkeit ermittelbar ist.

2. Meßanordnung gemäß Anspruch 1, **dadurch gekennzeichnet, daß** die Torusspule (1, 2) aus einem Spulenkörper (1), der mit Draht (2) umwickelt ist, besteht.

3. Meßanordnung gemäß Anspruch 2, **dadurch gekennzeichnet, daß** die Drahtwicklung (2) der Torusspule (1, 2) einlagig ist.

4. Meßanordnung gemäß Anspruch 2, **dadurch gekennzeichnet, daß** der Spulenkörper (1) aus nichtmagnetischem Material besteht.

5. Meßanordnung gemäß Anspruch 1, **dadurch gekennzeichnet, daß** die Torusspule (1, 2) durch eine axiale Ebene geteilt ist und geöffnet werden kann.

6. Meßanordnung gemäß Anspruch 5, **dadurch gekennzeichnet, daß** mindestens ein Scharnier zum Aufklappen der Torusspule (1, 2) vorgesehen ist.

7. Meßanordnung gemäß Anspruch 1, **dadurch gekennzeichnet, daß** die Torusspule (1, 2) durch eine translatorische Bewegung in axialer oder radialer Richtung zu öffnen ist.

8. Meßanordnung gemäß Anspruch 1, **dadurch gekennzeichnet, daß** die Vorrichtung eine mit der Torusspule (1, 2) zusammengeschaltete Kapazität zur Bildung eines Schwingkreises umfaßt.

9. Meßanordnung gemäß Anspruch 8, **dadurch gekennzeichnet, daß** die Auswerteschaltung Mittel zum Feststellen der Dämpfung des Schwingkreises aufweist.

10. Meßanordnung gemäß Anspruch 1, **dadurch gekennzeichnet, daß** die Auswerteschaltung Mittel zum Bestimmen der Güte der Torusspule (1, 2) aufweist.

11. Verfahren zum berührungsfreien Messen der Leitfähigkeit einer in einem Strömungskanal befindlichen Flüssigkeit, mit folgenden Verfahrensschritten:
• Anordnen genau einer Torusspule um den Strömungskanal, wobei die Torusspule ein zeitlich veränderliches Magnetfeld erzeugt, durch welches im Innern des Toruskörpers ein zeitlich veränderliches elektrisches Feld erzeugt wird, dessen Feldvektor in axialer Richtung durch den Torus und damit durch den in den Torusring angeordneten Strömungskanal verläuft und wobei eine Auswerteschaltung mit der Torusspule verbunden ist,
• Messen des Leistungsverlustes der die Torusspule und die Auswerteschaltung umfassenden Meßanordnung und
• Berechnen der Leitfähigkeit aus dem gemessenen Leistungsverlust in der Auswerteschaltung.

12. Verwendung der Meßanordnung gemäß der Ansprüche 1 bis 10 oder des Verfahrens gemäß Anspruch 11 zur Leitfähigkeitsmessung von Dialyseflüssigkeiten.

## Claims

1. Measuring setup for contactless measurement of the conductivity of a liquid in a flow channel, said measuring setup comprising a single toroidal coil (1, 2) configured to surround the flow channel (3) and generate a time-variable magnetic field that generates a time-variable electric field inside the toroidal body, the field vector of said electric field running in axial direction through the torus and thus through the flow channel inside the toroidal ring, said measuring setup also comprising an analyser circuit connected to the toroidal coil (1), with which circuit - by means of the power loss caused by the current flow in the liquid and the liquid's ohmic resistance - the conductivity of the liquid in the flow channel (3) can be determined.

2. Measuring setup according to claim 1, **characterised in that** the toroidal coil (1, 2) consists of a coil form (1), which is wound with wire (2).

3. Measuring setup according to claim 2, **characterised in that** the wire winding (2) of the toroidal coil (1, 2) is a single layer.

4. Measuring setup according to claim 2, **characterised in that** the coil form (1) is made of non-magnetic material.

5. Measuring setup according to claim 1, **characterised in that** the toroidal coil (1, 2) is divided along an axial plane and can be opened.

6. Measuring setup according to claim 5, **characterised in that** at least one hinge is provided for the purpose of opening the toroidal coil (1, 2).

7. Measuring setup according to claim 1, **characterised in that** the toroidal coil (1, 2) opens in response to a translational movement in axial or radial direction.

8. Measuring setup according to claim 1, **characterised in that** the device comprises a capacitor that is connected to the toroidal coil (1, 2) and forms an oscillating circuit therewith.

9. Measuring setup according to claim 8, **characterised in that** the analyser circuit has means for determining damping of the oscillating circuit.

10. Measuring setup according to claim 1, **characterised in that** the analyser circuit has means for determining the Q value of the toroidal coil (1, 2).

11. A method of performing contactless measurement of the conductivity of a liquid in a flow channel, comprising the following steps:
• surrounding the flow channel with a single toroidal coil, said toroidal coil generating a time-variable magnetic field that generates a time-variable electric field inside the toroidal body, the field vector of said electric field running in axial direction through the torus and thus through the flow channel inside the toroidal ring, and there being an analyser circuit connected to the toroidal coil;
• measuring the power loss of the measuring setup comprising the toroidal coil and the analyser circuit;
• calculating the conductivity from the measured power loss with the analyser circuit.

12. Use of the measuring setup according to claims 1 to 10 or of the method according to claim 11 for measuring the conductivity of dialysis fluids.

## Revendications

1. Dispositif de mesure pour la mesure sans contact de la conductibilité d'un liquide situé dans un conduit d'écoulement, ledit dispositif de mesure comportant exactement une bobine torique (1, 2) destinée à être disposée autour du conduit d'écoulement (3), laquelle génère un champ magnétique variable dans le temps, par lequel est généré à l'intérieur du corps torique un champ électrique variable dans le temps, dont le vecteur de champ s'étend dans la direction axiale à travers le tore et donc à travers le conduit d'écoulement disposé dans l'anneau torique, et comportant un circuit d'analyse relié à la bobine torique (1) et dans lequel, au moyen de la perte de puissance due au flux de courant dans le liquide et à la résistance ohmique du liquide, il est possible de déterminer la conductibilité du liquide situé dans le conduit d'écoulement (3).

2. Dispositif de mesure selon la revendication 1, **caractérisé en ce que** la bobine torique (1, 2) est formée par un corps (1) autour duquel est enroulé un fil (2).

3. Dispositif de mesure selon la revendication 2, **caractérisé en ce que** le fil (2) de la bobine torique (1, 2) est enroulé sur une couche.

4. Dispositif de mesure selon la revendication 2, **caractérisé en ce que** le corps (1) de la bobine est réalisé dans un matériau non magnétique.

5. Dispositif de mesure selon la revendication 1, **caractérisé en ce que** la bobine torique (1, 2) est divisée par un plan axial et peut être ouverte.

6. Dispositif de mesure selon la revendication 5, **caractérisé en ce qu'**il est prévu au moins une charnière pour l'ouverture par rabattement de la bobine torique (1, 2).

7. Dispositif de mesure selon la revendication 1, **caractérisé en ce que** la bobine torique (1, 2) peut être ouverte par un mouvement de translation dans la direction axiale ou radiale.

8. Dispositif de mesure selon la revendication 1, **caractérisé en ce que** le dispositif comporte une capacité associée à la bobine torique (1, 2) pour former un circuit oscillant.

9. Dispositif de mesure selon la revendication 8, **caractérisé en ce que** le circuit d'analyse comporte des moyens pour constater l'amortissement du circuit oscillant.

10. Dispositif de mesure selon la revendication 1, **caractérisé en ce que** le circuit d'analyse comporte des moyens pour déterminer le facture de qualité de la bobine torique (1, 2).

11. Procédé pour la mesure sans contact de la conductibilité d'un liquide situé dans un conduit d'écoulement, comportant les étapes suivantes :
- mise en place d'exactement une bobine torique autour du conduit d'écoulement, ladite bobine torique générant un champ magnétique variable dans le temps par lequel est généré à l'intérieur du corps torique un champ électrique variable dans le temps, dont le vecteur de champ s'étend dans la direction axiale à travers le tore et donc à travers le conduit d'écoulement disposé dans l'anneau torique, un circuit d'analyse étant relié à la bobine torique,
- mesure de la perte de puissance du dispositif de mesure comportant la bobine torique et le circuit d'analyse, et
- calcul de la conductibilité à partir de la perte de puissance mesurée dans le circuit d'analyse.

12. Utilisation du dispositif de mesure selon les revendications 1 à 10 ou du procédé selon la revendication 11 pour la mesure de la conductibilité des liquides de dialyse.
